# EUROPÄISCHE PATENTSCHRIFT

(11) **EP 3 969 227 B1**
(45) Veröffentlichungstag und Bekanntmachung des Hinweises auf die Patenterteilung: **31.05.2023**
(21) Anmeldenummer: 19769432.6
(22) Anmeldetag: 11.09.2019
(51) Int. Cl.: B25F 5/02, A62B 3/00

(54) **TRAGBARES ARBEITSGERÄT FÜR DEN PORTABLEN EINSATZ**
PORTABLE TOOL FOR MOBILE USE
OUTIL PORTATIF DESTINÉ À UN USAGE MOBILE

(43) Veröffentlichungstag der Anmeldung: 23.03.2022
(73) Patentinhaber: Lukas Hydraulik GmbH, 91058 Erlangen (DE)
(72) Erfinder: LITTWIN, Thomas, 90763 Fürth (DE); PIEPER, Michael, 91522 Ansbach (DE)
(74) Vertreter: Stippl Patentanwälte
(86) Internationale Anmeldenummer: PCT/EP2019/074265
(87) Internationale Veröffentlichungsnummer: WO 2021/047774

(56) Entgegenhaltungen:
- JP-A- 2014 087 903
- KR-B1- 102 002 641
- US-B1- 6 329 788

## Beschreibung

Die vorliegende Anmeldung betrifft ein elektromechanisches oder elektrohydraulisches Arbeitsgerät für den portablen Einsatz wie z.B. ein Spreizgerät, Schneidgerät oder Kombigerät mit Schneid- sowie Spreizfunktion oder einen Hebezylinder (bzw. Rettungszylinder). Die vorgenannten dienen vorzugsweise jeweils dem Rettungseinsatz, können aber auch einem Arbeitseinsatz dienen. Die vorliegende Anmeldung betrifft ferner einen Akku zur Verwendung in einem entsprechenden Arbeitsgerät sowie eine Anordnung umfassend ein Arbeitsgerät und einen Akku zum Betrieb desselben.

### Technologischer Hintergrund

Portable, von einer Bedienungsperson tragbare, motorisch angetriebene elektromechanische oder elektrohydraulische Arbeitsgeräte oder Rettungsgeräte der hier interessierenden Art werden bei vielfältigen Anwendungen eingesetzt. So gibt es beispielsweise Spreizgeräte, Schneidgeräte oder sogenannte Kombigeräte, d.h. Geräte mit Schneid- sowie Spreizfunktion und Rettungszylinder, die von Einsatzkräften (Feuerwehr) beispielsweise dazu verwendet werden, verletzte Personen aus Unfallfahrzeugen zu bergen oder Erdbebenopfer zu befreien. Die Art der Arbeitsgeräte bzw. der Rettungsgeräte ist hierbei vielfältig. Es gibt elektrohydraulisch oder elektromechanisch angetriebene Arbeitsgeräte bzw. Rettungsgeräte mit, vorzugsweise gehärteten, Werkzeugeinsätzen zum Schneiden, Spreizen oder zum Drücken. Derartige Geräte werden im Einsatz extremen hohen mechanischen Anforderungen ausgesetzt und sind je nach Einsatzort unterschiedlichsten Umwelteinflüssen (Hitze, Kälte, Feuchtigkeit) unterworfen.

Hierbei ist es von besonderer Bedeutung, dass insbesondere Rettungsgeräte im Einsatz eine ganz besonders hohe Betriebszuverlässigkeit gewährleisten, da insbesondere Rettungseinsätze stets schnell durchgeführt werden müssen und überraschende Betriebsausfälle deshalb fatale Folgen haben können.

Akkubetriebene elektromechanische oder elektrohydraulische Arbeitsgeräte sind aufgrund ihrer guten Handhabbarkeit für unterschiedlichste Einsatzzwecke interessant. Beispielsweise könnten bei bestimmten Arbeits- bzw. Rettungssituationen (z. B. beim Militär, bei Offshore-Förderplattformen für Öl oder Gas, bei Offshore-Windparkanlagen usw.) entsprechende Arbeitsgeräte wegen deren guter Handhabbarkeit theoretisch auch unter Wasser betrieben werden. Bisherige ackubetriebe Geräte waren jedoch für einen Unterwassereinsatz nicht geeignet.

### Druckschriftlicher Stand der Technik

Aus G 93 10 597.5 ist ein akkubetriebenes Unterwasser-Elektrogerät in Form z. B. einer Pumpe bekannt. Das Unterwasser-Elektrogerät verfügt über ein wasserdichtes rohrförmiges Gehäuse, in das ein mit in Umfangsnuten eingelegten O-Dichtungsringen ausgestattetes Gehäuseendteil eingepresst wird. Die Konstruktion ist sehr aufwendig. Aus der KR 102 002 641 B1 ist ein tragbares Arbeitsgerät gemäß dem Oberbegriff des Anspruchs 1 bekannt. Aus der JP 2014 087903 A ist einen Akku gemäß dem Oberbegriff des Anspruchs 11 bekannt.

### Aufgabe der vorliegenden Erfindung

Die Aufgabe der vorliegenden Erfindung besteht darin, ein Arbeitsgerät zur Verfügung zu stellen, welches einerseits einen Einsatz unter Wasser erlaubt, andererseits mit einfachen konstruktiven Mittel zu realisieren ist. Des Weiteren besteht die Aufgabe der vorliegenden Erfindung darin, einen Akku zur Verfügung zu stellen, welcher für ein entsprechendes Arbeitsgerät eingesetzt werden kann.

### Lösung der Aufgabe

Die vorstehende Aufgabe wird durch die Merkmale des Anspruchs 1 gelöst. Zweckmäßige Ausgestaltungen sind in den Unteransprüchen beansprucht.

Dadurch, dass der Kontakt des Arbeitsgeräts in einen ersten Oberflächenbereich sowie einen zweiten Oberflächenbereich aufgeteilt ist, der erste Oberflächenbereich mit einer nicht leitfähigen Oberflächenschutzschicht überzogen ist und der zweite Oberflächenbereich Oberflächenschutzschicht-frei ist, wird es möglich, ein entsprechend ausgestattetes Arbeitsgerät auch unter Wasser, insbesondere sogar auch unter Salzwasser, zu betreiben, ohne dass elektrochemische Vorgänge beim Betrieb des Arbeitsgeräts unter Wasser diesen nachteilig beeinträchtigen. Die Oberflächenschutzschicht isoliert den ersten Oberflächenbereich des Kontakts gegenüber Wasser, insbesondere gegenüber sehr leitfähigem Salzwasser. Die konstruktive Maßnahme führt dazu, dass trotz einer recht hohen elektrischen Leitfähigkeit von Salzwasser der erste mit einer Oberflächenschutzschicht überzogene Oberflächenbereich mit dem Wasser keinen, zumindest keinen wesentlichen Stromfluss bewirkt und demzufolge keine maßgeblichen Korrosionserscheinungen auftreten. Lediglich der zweite Oberflächenbereich, der Oberflächenschutzschicht-frei ausgestaltet ist, ist dazu vorgesehen, eine direkte Berührung mit den Kontakten des Akkus im gepaarten Zustand mit dem Akku zu haben. Gleichzeitig wird aber ein ausreichender Stromfluss über den Querschnitt des Kontakts im gepaarten Zustand mit dem Akku vom Akku hin zum Arbeitsgerät ermöglicht. Dies ist wichtig, da beim Einschalten des Arbeitsgeräts für einige Millisekunden z. B. bis zu 60 Ampere Strom vom Akku gezogen werden können. Während des Betriebs können bis zu ca. 40 Ampere erreicht werden. Ebenso kann der Kontakt in einer ausreichenden Länge, vorzugsweise als einschuborientierter Flachkontakt ausgebildet sein, um die notwendige mechanische Stabilität an einer Platine zu gewährleisten. Bei dem Kontakt bzw. Flachkontakt kann es sich um ein herkömmliches Kontaktblech bzw. um einen Metallkontakt handeln, das bzw. der mit einer galvanischen Schutzschicht versehen ist, auf der sich im ersten Bereich die Oberflächenschutzschicht befindet. Im Übrigen ermöglicht es die Erfindung, bestehende Arbeitsgeräte in einfacher Weise hochzurüsten.

Der zweite Oberflächenbereich ist am Kontakt vorzugsweise an der in Einschubrichtung befindlichen Seite des Kontakts vorgesehen.

Zweckmäßigerweise ist der erste Oberflächenbereich größer als der zweite Oberflächenbereich. Vorzugsweise umfasst der erste Oberflächenbereich, also der Bereich, der mit der Oberflächenschutzschicht überzogen ist, auch die Stirnseite des Kontakts. Der Kontakt ist somit vollständig mit der Oberflächenschutzschicht überzogen, bis auf den zweiten Oberflächenschutzschicht-freien Oberflächenbereich. Vorzugsweise können auch die Stirnflächen in diesem Bereich von der Oberflächenschutzschicht überzogen sein. Der betreffende Kontakt weist zweckmäßigerweise mindestens einen Kontaktfuß auf, der mit einer Platine verbunden, vorzugsweise verlötet, ist. Der Bereich der Verbindung des Kontakts mit der Platine ist zweckmäßigerweise mittels Vergussmasse vergossen bzw. verkapselt.

Der Kontakt kann hierbei derart am Gehäuse der Akkuaufnahme angeordnet sein, dass er von der Platine an der Innenwand des Gehäuses durch dieses hindurch nach Außen ragt.

Zweckmäßigerweise sind mehrere Kontakte in Einschubrichtung orientiert parallel zueinander angeordnet.

Gemäß einer zweckmäßigen Ausgestaltung der vorliegenden Erfindung handelt es sich bei der Oberflächenschutzschicht um eine Lackschicht, insbesondere eine Abdecklackschicht vorzugsweise auf Acryl-Basis. Die Lackschicht verhindert einen elektrischen Stromfluss zum umgebenden Wasser.

Alternativ kann statt einer Lackschicht auch eine Schicht aus Vergussmasse als Oberflächenschutzschicht vorgesehen sein, vorzugsweise eine Vergussmasse auf Basis eines Gießharzes bzw. auf PU-, Epoxid- oder Silikonbasis. Auch damit lässt sich ein wirksamer Oberflächenschutz des Kontakts erzielen.

Dadurch, dass als Elektromotor ein bürstenloser Gleichstrommotor (BLDC-Motor) vorgesehen ist, die elektronischen Bauelemente der Platine zum Schutz gegen Eintritt von Wasser mit Vergussmasse umschlossen sind und die Anschlusselemente des Steuerungskabels gegen ein Eindringen von Wasser geschützt sind, kann das Arbeitsgerät auch betrieben werden, obgleich Wasser in das Innere des Gehäuses eindringt. Es wurde festgestellt, dass ein Wasserkontakt des Rotors mit den Permanentmagneten unschädlich ist. Es ist lediglich notwendig, die Anschlussmittel des Steuerungskabels mittels einer Dichtung gegen ein Eindringen von Wasser zu schützen.

Zweckmäßigerweise müssen somit am Gehäuse des Arbeitsgeräts keine Schutz- und/oder Dichtungsmaßnahmen gegen einen Eintritt von Wasser in das Innere des Gehäuses beim Eintauchen des Gehäuses bzw. des Arbeitsgeräts in Wasser vorgesehen sein.

Die vorstehende Aufgabe wird bei dem gattungsgemäßen Akku durch die Merkmale des Anspruchs 11 gelöst.

Erfindungsgemäß besitzt der Akku ein gegen das Eindringen von Wasser abgedichtetes Akkugehäuse, innerhalb des Akkugehäuses angeordnete Akkuzellen sowie einen nicht gegen Wasser geschützten Anschlussbereich für einen elektrischen Anschluss des Akkus am Anschluss- oder Einschubschacht eines Arbeitsgeräts, wobei der Anschlussbereich mindestens eine im Akkugehäuse untergebrachte, von außen über eine schlitzartige Durchtrittsöffnung zugängliche Kontaktierungs-Kammer aufweist, in der sich mindestens ein Kontaktelement vorzugweise in Form einer Kontaktklammer befindet. Ein entsprechender Akku ist in der Lage, bei einem Einsatz eines Arbeitsgeräts der vorbeschriebenen Art unter Wasser, insbesondere unter Salzwasser, den Kontakt des Arbeitsgeräts am zweiten Oberflächenbereich zu kontaktieren, ohne dass das Wasser bei Stromfluss eine Korrosion und damit eine Zerstörung des Kontakts verursachen kann.

Dadurch, dass der Anschlussbereich als Erhöhung am Akkugehäuse ausgebildet ist, kann der Anschlussbereich durch eine lineare Verschiebung zu dem oder den Kontakten des Arbeitsgeräts in einfacher Weise mit dem Arbeitsgerät verbunden werden.

Für einen Schutz gegen einen Eintritt von Wasser in die Kontaktierungs-Kammer hat sich als besonders wirksam erwiesen, im Bereich der schlitzartigen Durchtrittsöffnung eine elastische Verschlusseinrichtung vorzusehen, die sich beim Einschieben des Kontakts durch die Durchtrittsöffnung verformt, den Zugang freigibt aber an den Seiten des Kontakts dichtend anliegt.

Vorzugsweise kann als elastische Verschlusseinrichtung eine Anordnung von mindestens zwei Dichtelementen, insbesondere in Form von quer zur schlitzartigen Durchtrittsöffnung orientierten biegsamen Plättchen oder Dichtungswülsten vorgesehen sein. Beispielsweise können diese aus Gummi oder elastischem Kunststoff bestehen.

Die zwei quer zur schlitzartigen Durchtrittsöffnung orientierten Plättchen können sich stirnseitig berühren, einen geringfügigen Spalt zueinander bilden oder aber sich überlappen.

Ein noch verbesserter Schutz gegen das Eindringen von Wasser wird dadurch erreicht, wenn die Kontaktierungs-Kammer zusätzlich mit einer gelartigen Masse gefüllt ist.

Die gelartige Masse sollte nicht leitfähig sein. Zweckmäßigerweise besitzt die gelartige Masse einen spezifischen Widerstand von größer 1 × 10¹⁰ Ω × mm²/m, vorzugsweise von größer 1 × 10¹³ Ω × mm²/m, besonders vorzugsweise von größer 1 × 10¹⁵ Ω × mm²/m.

Es kann sich hierbei um ein vernetztes Gel auf Silikon-Basis handeln.

Die elastische Verschlusseinrichtung bewirkt in Verbindung mit der gelartigen Masse zudem, dass beim Entfernen des Akkus aus dem Aufnahmeschacht durch das hierdurch begründete Herausziehen des Kontakts des Arbeitsgeräts aus der Kontaktierungs-Kammer die elastische Verschlusseinrichtung die gelartige Masse vom Kontakt des Arbeitsgeräts abstreift.

Die vorliegende Erfindung betrifft des Weiteren eine Anordnung umfassend ein tragbares Arbeitsgerät gemäß mindestens einem der Ansprüche 1 bis 10 sowie einen Akku gemäß mindestens einem der Ansprüche 11 bis 18.

### Beschreibung der Erfindung anhand von Ausführungsbeispielen

Nachstehend wird eine zweckmäßige Ausgestaltung der vorliegenden Erfindung näher beschrieben. Wiederkehrende Merkmale sind der Übersichtlichkeit halber lediglich einmal mit einem Bezugszeichen versehen. Es zeigen:
- Fig. 1: die Darstellung einer Gesamtansicht eines Beispiels eines Arbeitsgeräts in Form eines elektro-hydraulischen, batteriebetriebenen Schneidgeräts gemäß der Erfindung;
- Fig. 2: ein Beispiel eines hydraulischen Schaltplans des Schneidgeräts gemäß Fig. 1;
- Fig. 3: eine Teilschnittdarstellung des Gehäusebereichs des erfindungsgemäßen Arbeitsgeräts gemäß Fig. 1;
- Fig. 4: eine vergrößerte Darstellung des Bereichs A von Fig. 3;
- Fig. 5: eine vergrößerte Darstellung des Bereichs B von Fig. 3;
- Fig. 6: eine vergrößerte Darstellung des Bereichs C von Fig. 3;
- Fig. 7: eine perspektivische Darstellung eines Beispiels einer Platinen-Anordnung zur Verwendung im Rahmen der vorliegenden Erfindung;
- Fig. 8: eine Draufsicht auf ein Beispiel eines Bedienfeldes mit einer Displayanordnung gemäß der vorliegenden Erfindung;
- Fig. 9: verschiedene Ansichten eines Beispiels eines Gehäusebereichs im Bereich der Akkuaufnahme in perspektivischer Außenansicht (Fig. 9a), in perspektivischer Innenansicht ohne Vergussmasse (Fig. 9b) sowie in perspektivischer Innenansicht mit Vergussmasse (Fig. 9c);
- Fig. 10: eine perspektivische Darstellung eines Beispiels eines erfindungsgemäßen Akkus;
- Fig. 11: eine perspektivische Darstellung der Orientierung der Teile zueinander beim Aufschieben des Akkus gemäß Fig. 10 auf die Akkuaufnahme des Arbeitsgeräts, wobei lediglich das die Akkuaufnahme tragende Gehäuseteil dargestellt ist;
- Fig. 12: eine Schnittdarstellung durch die zusammengefügten Teile gemäß Fig. 11;
- Fig. 13: eine Teilschnittdarstellung des Akkus mit aufgeschnittenem Anschlussbereich;
- Fig. 14: eine vergrößerte Schnittdarstellung einer Kontaktierungs-Kammer als Teil des Anschlussbereichs sowie
- Fig. 15: eine Draufsicht auf einen Kontakt des erfindungsgemäßen Arbeitsgeräts.

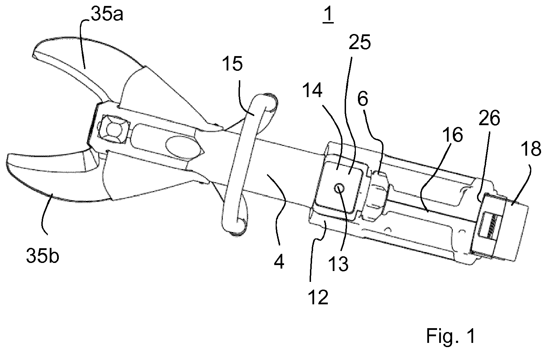

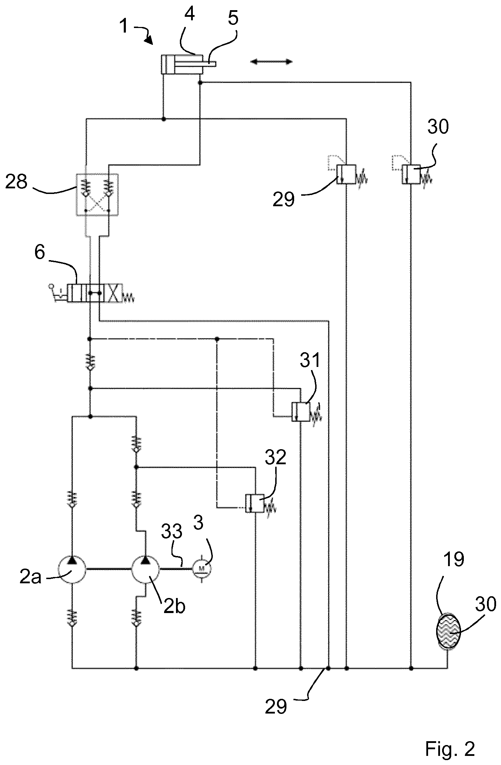

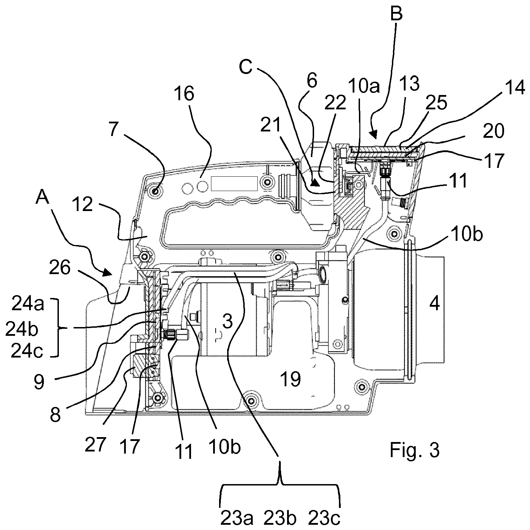

Bezugszeichen 1 in Fig. 1 bezeichnet ein Beispiel eines erfindungsgemäßen Arbeitsgeräts in seiner Gesamtheit. Bei der Ausgestaltung gemäß Fig. 1 ist das Arbeitsgerät 1 ein elektro-hydraulisches, batteriebetriebenes Schneidgerät (Cutter). Das Arbeitsgerät 1 umfasst ein Gehäuse 12, in dem sich ein Elektromotor 3 in Form eines bürstenlosen Gleichstrommotors (BLDC-Motor), eine Hydraulikpumpe 2 (Kolbenverdichter 2a, 2b) sowie ein Hydrauliktank 19 mit Hydraulikfluid 30 befinden (vgl. auch Fig. 2 und 3). Darüber hinaus ist eine Ausgleichseinrichtung zum Volumenausgleich der Hydraulikflüssigkeit während des Betriebs des Arbeitsgeräts 1 vorgesehen. Hierbei kann es sich z.B. um eine flexible Membran oder einen insgesamt flexiblen Hydrauliktank handeln. Am Gehäuse 12 angebracht ist ein Bedienfeld 25 mit Display 14 sowie Ein-/Ausschalter 13. An dem Display 14 können die Betriebszustände von der Bedienungsperson abgelesen werden. An der Rückseite des Gehäuses ist ein Einschubschacht 26 für einen auswechselbaren Akku 18 vorgesehen. Anstelle des Akkus könnte an dieser Stelle auch ein (in Fig. 1 nicht dargestelltes) Netzteil eingeschoben werden. Die Nennspannung zum Betrieb des Geräts beträgt z. B. 24 Volt.

An der Vorderseite des Arbeitsgeräts 1 befinden sich in dem gezeigten Beispiel zwei Werkzeughälften 35a, 35b, welche bei der in Fig. 1 dargestellten Ausgestaltung Schneidwerkzeughälften sind. Die beiden Schneidwerkzeughälften werden über eine (in Fig. 1 nicht dargestellte) Kolbenstange angetrieben. Letztere befindet sich in einem Hydraulikzylinder 4. Im Bereich des Hydraulikzylinders 4 befindet sich ein erster Handgriff 15. Ein zweiter Handgriff 16 ist am Gehäuse 12 vorgesehen. Das Arbeitsgerät 1 kann somit von der Bedienungsperson mit zwei Händen geführt bzw. bedient werden. Über ein manuell bedienbares Hydraulikventil 6 (Steuerventil) kann die Bedienungsperson mit der am zweiten Handgriff 16 befindlichen Hand manuell die Richtung des Hydraulikstroms steuern, sodass die Kolbenstange entweder eingefahren wird (wobei die Werkzeughälften 35a, 35b geschlossen werden) oder ausgefahren wird (wobei die Werkzeughälften 35a, 35b geöffnet werden) oder Hydrauliköl in den Versorgungskreislauf also hin Zum Hydrauliktank zurückgeleitet wird (Bypass-Betrieb).

Bei der in Fig. 1 dargestellten Ausgestaltung des Steuerventils 6 handelt es sich um ein in der Verlängerung der Achse des Handgriffs 16 drehbares Steuerventil mit einem sogenannten Sterngriff, welcher zur Ansteuerung der Schaltpositionen von der Bedienungsperson gedreht wird. Das Gehäuse 12 umfasst zwei Gehäuseschalen, die (vgl. Fig. 3) über Verbindungselemente 7, z.B. Schrauben, miteinander verbunden sind. Es ist keine Dichtung zum Schutz gegen ein Eindringen von Wasser in das Gehäuse 12 bei einem Eintauchen des Gehäuses 12 in Wasser vorgesehen. Der Rotor des bürstenlosen Gleichstrommotors ist nicht vor Wasser geschützt.

Die hier in Rede stehenden Arbeitsgeräte sind in der Lage, in jeglicher räumlicher Anordnung oder Ausrichtung betrieben zu werden.

Anstelle des vorbeschriebenen Schneidgeräts kann die Erfindung auch als ein Spreizgerät, ein Kombigerät mit Schneid- sowie Spreizfunktion oder als Hebe- bzw. Rettungszylinder ausgestaltet sein. Bei all diesen Geräten kommt eine Kolbenstange, die in einem Zylinder, z.B. Hydraulikzylinder geführt ist, zum Einsatz.

Fig. 2 zeigt ein Beispiel eines hydraulischen Schaltplans eines Arbeitsgeräts nach Fig. 1. Bei dem Elektromotor handelt es sich um einen bürstenlosen Gleichstrommotor, welcher über eine Exzenterwelle 36 eine Hydraulikpumpe 2 in Form von zwei Kolbenverdichtern 2a, 2b antreibt. Der Kolbenverdichter 2b kann eine größere Förderleistung aufweisen als der Kolbenverdichter 2a. Der Förderstrom des Kolbenverdichters 2b wird z. B. auf ein Druckumschaltventil 32 geleitet. Der Förderstrom des Kolbenverdichters 2a wird als Steuersignal ebenfalls auf das Druckumschaltventil 32 geleitet. Das Druckumschaltventil 32 kann mittels Federkraft auf einen bestimmten Druckumschaltwert eingestellt werden. Übersteigt der Druck in der Steuerleitung des Kolbenverdichters 2a diesen Druckumschaltwert, so wird das Druckumschaltventil 32 geöffnet und der Förderstrom des Kolbenverdichters 2b wird in den Tank 19 abgeleitet. So ist sichergestellt, dass die benötigte Antriebsleistung des Systems innerhalb der verfügbaren Antriebsleistung bleibt.

Der Förderstrom verzweigt sich im weiteren Verlauf in Richtung Umschaltventil 6 und Druckabschaltventil 31. Das Druckabschaltventil 31 ist auf den zulässigen Systemdruck mittels Federkraft eingestellt. Übersteigt der Druck den eingestellten zulässigen Systemdruck, so öffnet das Druckabschaltventil 31 und lässt den Förderstrom so lange in den Tank zurückfließen, bis der zulässige Druck wieder unterschritten wird.

Das Steuerventil 6 wird mittels Sterngriff (vgl. Fig. 1) manuell vom Benutzer betätigt. Es hat eine federunterstützte Rückstellfunktion in die Neutralstellung. In der Neutralstellung befindet es sich, wie dargestellt, in der Mittelstellung. In dieser Stellung sind alle angeschlossenen Leitungen mit dem Tank verbunden, sodass sich kein Druck aufbauen kann und das System sich somit nicht bewegt. Wird das Steuerventil 6 z.B. nach rechts ausgelenkt, so wird in der linken Anschlussleitung mit Druck behafteter Förderstrom in Richtung des doppelt entsperrbaren Rückschlagventils 28 gefördert. Auf der rechten Anschlussleitung wird Hydrauliköl, welches aus Richtung des doppelt entsperrbaren Rückschlagventils 28 kommt, in den Tank 19 zurückgeführt. Wird das Steuerventil 6 nach links ausgelenkt, so dreht sich der eben beschriebene Prozess um, sodass letztendlich die Bewegungsrichtung des Gerätes umgekehrt wird. Der Förderstrom, der in die linke Anschlussleitung des doppelt entsperrbaren Rückschlagventils 28 gefördert wird, öffnet dort ein federbelastetes Rückschlagventil in der linken Anschlussleitung und über eine Steuerleitung, welche auf die rechte Anschlussleitung geführt wird, ebenfalls das dort befindliche Rückschlagventil. So ist sichergestellt, dass einerseits der Förderstrom in der linken Anschlussleitung dem Hydraulikzylinder 4 des Geräts zugeführt werden kann. Andererseits ist sichergestellt, dass das Hydrauliköl, welches aus dem Hydraulikzylinder 4 auf der rechten Seite aus dem Zylinder verdrängt wird, durch das doppelt entsperrbare Rückschlagventil 28 auf der rechten Anschlussleitung in den Tank 19 des Systems zurückgeführt werden kann.

Der Hydraulikzylinder 4 weist an beiden Anschlüssen eine Verzweigung auf Sicherheitsventile 29, 30 auf. Diese Sicherheitsventile 29, 30 gewährleisten, dass der in den Zylinderräumen befindliche Druck nicht höher als zulässig steigen kann. Steigt der Druck in einem oder in beiden Zylinderräumen über den sicherheitstechnisch zulässigen Druck an, so öffnen diese Ventile eine Verbindung zu dem Tank 19, sodass sich der Druck wieder abbauen kann. Zu einer Erhöhung des Drucks innerhalb des Hydraulikzylinders 4 kann es beispielsweise dadurch kommen, dass von außen auf den Kolben des Hydraulikzylinders 4 einwirkende Kräfte das Hydrauliköl zusätzlich komprimieren. An der Kolbenstange 5 des Hydraulikzylinders 4 sind Vorrichtungen angebracht, die z.B. ein Schermesser, ein Spreizer oder dergleichen bewegen. Der Tank 19 kann beispielsweise als flexibler Gummibalg ausgebildet sein und dient hierbei gleichzeitig als Ausgleichseinrichtung.

Fig. 3 zeigt in einer Teilschnittdarstellung das Innere des Bereichs des Gehäuses 12 des Arbeitsgeräts 1 von Fig. 1. Die elektronischen Steuer- und Regeleinrichtung zur Steuerung und/oder Regelung umfasst eine Platine 8 mit elektronischen Bauelementen 9, die insbesondere die Stromversorgung für den bürstenlosen Gleichstrommotor betreffen. Ferner ist im Bereich des Ein/Ausschalters 13 ein Bedienfeld mit einem Display 14 vorgesehen, welches eine eigene Platine 20 umfasst. Bei dem Bedienfeld des Displays 14 handelt es sich vorzugsweise um eine wasserdichte Folientastatur. Über die Folientastatur können die notwendigen Bedienungen vorgenommen werden. Ferner ist im Bereich des Steuerventils 6 eine weitere Platine 22 vorgesehen, auf der sich als elektronisches Bauelement ein Sensor 21 insbesondere Magnetsensor zur Erfassung der Auslenkung des Sterngriffs des Steuerventils 6 befindet. Mit der Drehung des Sterngriffs wird somit nicht nur die hydraulische Stellung des Steuerventils 6 verändert sondern zudem auch der Elektromotor ein- bzw. -ausgeschaltet und/oder über die Winkelstellung des Sterngriffs noch dazu eine Turbofunktion ein- und/oder ausgeschaltet. Der Sensor 21 steht über eine Steuerungsleitung 10a mit der Platine 20 in Verbindung. Über eine weitere Steuerungsleitung 10b steht die Platine 20 mit der Platine 8 in Verbindung, welche die Hauptplatine darstellt. Die Steuerungsleitung 10b ist über wasserdichte Anschlussmittel 11 mit der Platine 20 und/oder der Platine 8 verbunden. Ein Teil des jeweiligen Anschlussmittels 11 kann platinenseitig angeordnet sein und dort vorzugsweise ebenfalls zum Teil eingebettet sein. Der gegenüberliegende Teil der Anschlussmittel 11 befindet sich an der Steuerungsleitung 10a bzw. 10b. Bei dem Anschlussmittel 11 kann es sich um eine Steckverbindung und/oder Drehverbindung handeln, welche durch ein (in den Figuren nicht dargestelltes) Dichtmittel z. B. einen O-Ring abgedichtet ist.

Bei den Steuerleitungen 10a und/oder 10b handelt es sich jeweils um Leitungen, über die Steuersignale gesendet werden. Als Anschlussmittel 11 der Steuerleitung 10a an die elektronischen Bauelemente der Platine 20 und der Platine 22 des Sensors 21 ist bei der Ausgestaltung nach Fig. 3 jeweils eine direkte Anbindung an die Platine z. B. per Lötverbindung vorgesehen. Als Anschlussmittel 11 der Steuerleitung 10b zwischen der Platine 8 und der Platine 20 sind in Fig. 3 Steck und/oder Drehverbinder vorgesehen.

Ferner sind im Bereich der Platine 8 Stromkabel für die Energieversorgung des Elektromotors 3 angeordnet, die mit Kontakten 27 für den Akku oder ein Netzteil in elektrischer Verbindung stehen. In dem gezeigten Beispiel handelt es sich um eine dreiphasige Verbindung mit drei Stromkabeln 23a, 23b und 23c. Insbesondere können die elektrische Anschlüsse 24a bis 24c der Stromkabel 23a, 23b und 23c zur Energieversorgung des Elektromotors 3 in einem ausreichenden Abstand zueinander entfernt sind, der gewährleistet, dass für den Fall, dass die Anschlüsse 24a bis 24c von Wasser umgeben sind, sich bei den elektrischen Betriebsbedingungen des Arbeitsgeräts (z. B. bei einer Nennspannung von 24 Volt) über das Wasser als elektrisches Leitungsmedium kein elektrischer Kurzschluss einstellt. Entsprechende Anschlüsse sind auch am Elektromotor 3 vorgesehen, jedoch in Fig. 3 nicht erkennbar.

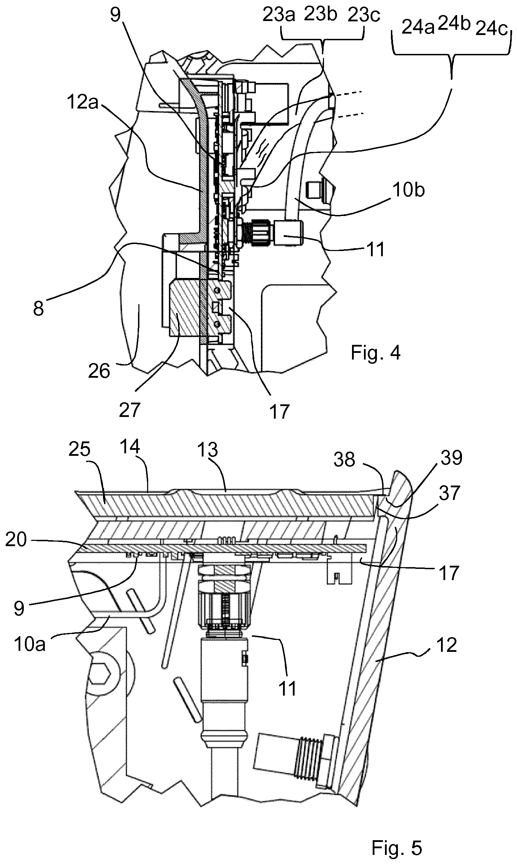

Offene also vor Wasser ungeschützte Kontakte 27 zum elektrischen Kontakt mit (einem in Fig. 4 jeweils nicht dargestellten) Akku oder einem Netzteil sind im Bereich des Einschubschachts 26 vorgesehen. Die Kontakte 27 sind ebenfalls in einem ausreichenden Abstand zueinander entfernt, der gewährleistet, dass für den Fall, dass die Kontakte 27 von Wasser umgeben sind, sich bei den elektrischen Betriebsbedingungen des Arbeitsgeräts über das Wasser als elektrisches Leitungsmedium kein elektrischer Kurzschluss einstellt. Die Kontakte 27 sowie die Platine 8 sind an einem Gehäuseteil 12a (Akkuaufnahme) befestigt. Die Steuerleitung 10b umfasst vor Wasser geschützte Anschlussmittel 11.

Aus der vergrößerten Teildarstellung von Fig. 5 sind die elektronischen Bauelemente 9 der Platine 20 ersichtlich, die von Vergussmasse 17 umschlossen sind. Ebenso ist aus Fig. 5 der Platinen-seitige Teil der Anschlussmittel 11 für die Platine 20 ersichtlich. Das Bedienfeld 25 ist als Folientastatur ausgebildet. Hierbei handelt es sich um einen sandwichförmigen Folienschichtaufbau. Der stirnseitige Rand des Bedienfeldes 25 also dieses Aufbaus ist ebenfalls von Vergussmasse 17 bedeckt ist. Hierzu ist im Bereich des stirnseitigen Randes des Bedienfeldes 25 ein vorzugsweise vollständig um das Bedienfeld 25 umlaufender Spalt 37 zum Gehäuse 12 gesehen. Der Spalt 37 wird außenseitig von einem Überstand 38 des Bedienfeldes 25 bzw. der Folientastatur (z. B. in Form einer überstehenden oberseitigen Folienschicht, welche mit einer Stufe 39 des Gehäuses 12 verklebt ist) bedeckt, so dass ein umlaufendes ringförmiges Sackloch entsteht, welches mit Vergussmasse 17 ausgefüllt werden kann. Auf diese Weise kann der gesamte Bereich "über Kopf" mit Vergussmasse 17 vergossen werden.

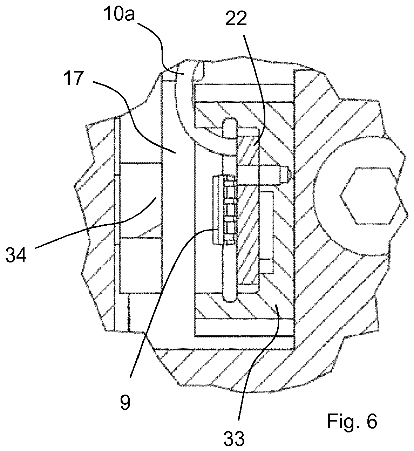

Aus der vergrößerten Teildarstellung von Fig. 6 ist der Magnetsensor 21 zur Feststellung der Auslenkung des Sterngriffs ersichtlich. Dieser befindet sich auf einer eigenen Platine 22, die in einem Sensorhalter 33 in Form einer taschenförmigen Ausnehmung untergebracht ist. Magnetsensor 21 sowie Platine 22 sind zur Außenseite des Sensorhalters 33 hin durch eine Vergussmasse 17 abgedichtet. Die Vergussmasse 17 verschließt somit die taschenartige Ausnehmung des Sensorhalters 33 nach außen hin. Mit der Platine 22 verbunden und mit der Vergussmasse 17 umschlossen ist auch die Steuerleitung 10a, die von der Platine 22 zur Platine 20 des Bedienfelds bzw. Displays 14 führt. Dort ist der Endbereich der Steuerleitung 10a ebenfalls von Vergussmasse 17 umschlossen.

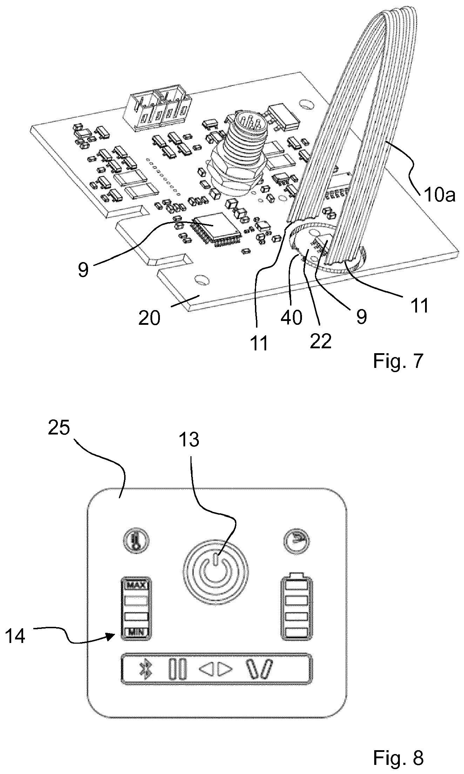

Fig. 7 zeigt die beiden Platinen 20, 22 mit elektronischen Bauelementen 9 (die Platine 22 mit einem elektronischen Bauelement z. B. in Form des Magnetsensors 21) im Ausgangszustand vor der Montage. Sie bestehen aus dem gleichen Platinengrundmaterial. Die Platine 22 ist als ein Entnahmebereich aus der anderen Platine 20 festgelegt. Beiden Platinen 20, 22 sind über das Steuerungskabel 10a verbunden. Als jeweilige Anschlussmittel 11 an beiden Platinen 20, 22 ist je eine Lötverbindung vorgesehen. Ferner sind zwei Solltrennstellen 40 (von denen in Fig. 7 nur eine zu sehen ist) vorgesehen, die zum Entnehmen der Platine 22 zerstört werden müssen, wodurch die Platine 22 mit Verdrahtung herausgenommen werden kann. Die Anschlussmittel 11 werden anschließend beim Vergießen der Platinen 20, 22 mit Vergussmasse 17 mit eingeschlossen.

Fig. 8 zeigt eine vergrößerte isolierte Darstellung des Bedienfeldes 25 mit dem Ein-/Ausschalter 13 sowie dem Display 14 mit verschiedenen Anzeigen sowie Bedienfeldern. Das Bedienfeld 25 ist vorzugsweise als wasserdichte Folientastatur ausgebildet.

Die vorliegende Erfindung ermöglicht es, das Arbeitsgerät 1 auch unter Wasser zu betreiben und zwar ohne, dass das Gehäuse 12 abgedichtet sein muss. Diese neue wichtige Funktionalität kann somit ohne aufwendige Umbaumaßnahmen bzw. ohne nennenswerte Verteuerung der Herstellungskosten erzielt werden.

Bei den elektronischen Bauelementen der Platine 8, 20 und/oder 22 handelt es sich insbesondere um Microcontroller, Frequenzumrichter, Speicherbausteine, elektronische Schalter, Messeinrichtungen wie z. B. integrierte Halbleitertemperatursensoren und/oder LEDs.

Das Display 14 umfasst eine Anzeigeeinrichtung, die wiederum z.B. eine Lastanzeige und/oder Betriebszustandsanzeige und/oder Temperaturanzeige umfassen kann.

Der Akku 18 weist ein wasserdichtes Gehäuse oder zumindest eine eigenständige wasserdichte Kapselung auf.

Bei dem Ein-/Ausschalter 13 handelt es sich um einen wasserdichten Ein-/Ausschalter, beispielsweise einen Folienschalter oder einen Tastschalter.

Als Vergussmasse kann vorzugsweise eine Vergussmasse auf PU-, Epoxid oder Silikonbasis verwendet werden. Eine Vergussmasse auf Silikonbasis ist besonders geeignet, sofern erhöhte Temperaturen beim Betrieb des Arbeitsgeräts 1 auftreten.

Alternativ zu dem Akku 18 kann auch im Normalbetrieb, d. h. nicht unter Wasser, ein (in den Figuren nicht gezeigtes) Netzteil in den Einschubschacht 26 eingesetzt werden, welches über ein Kabel mit dem Netz verbunden ist.

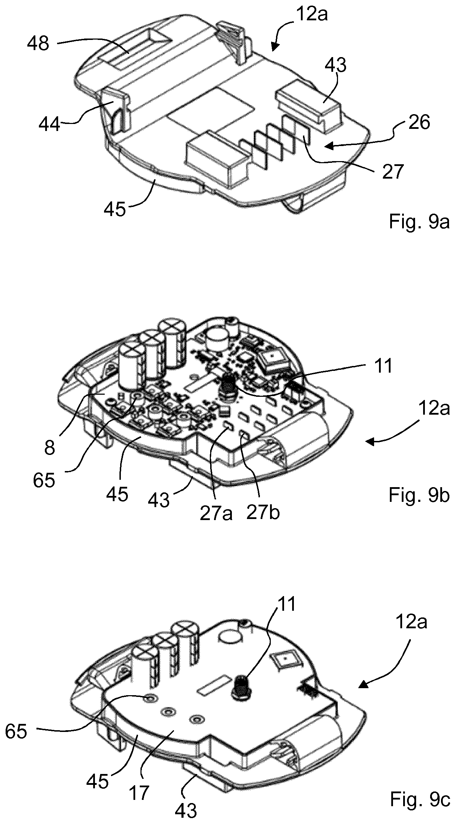

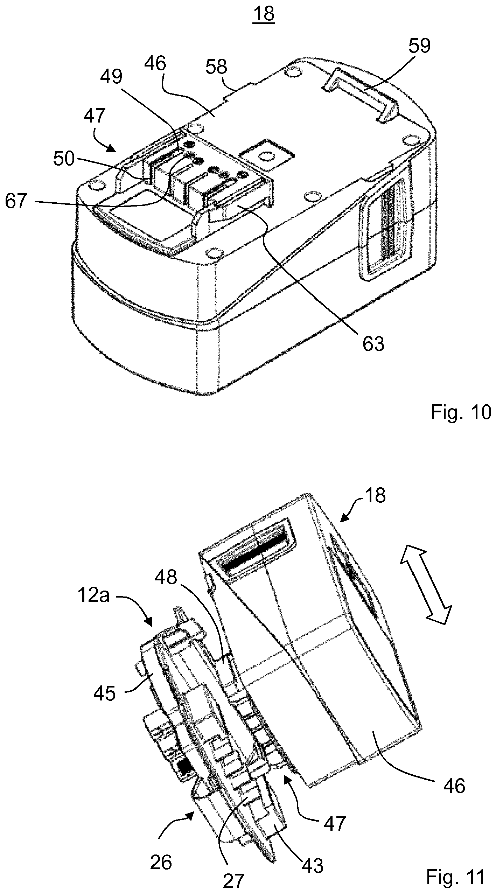

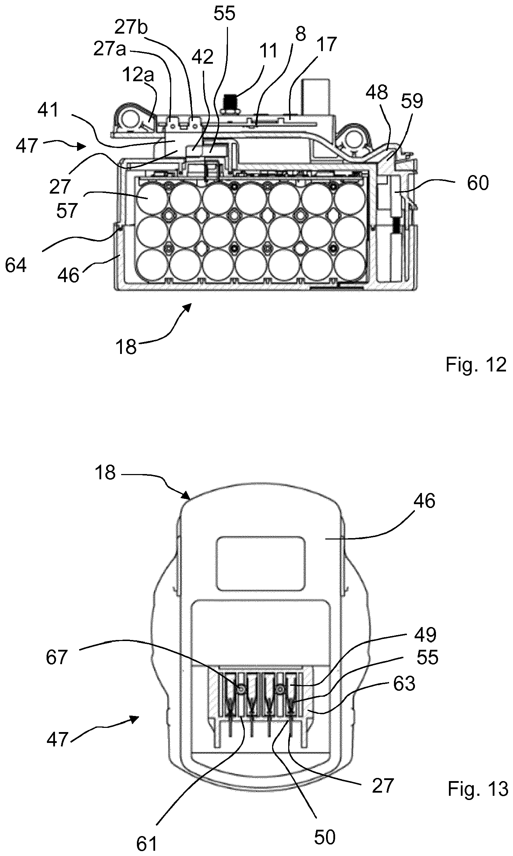

Bezugsziffer 12a zeigt das Gehäuse im Bereich der Akkuaufnahme in Fig. 9a in perspektivischer Darstellung. Hierbei kann es sich um einen eigenständigen Gehäuseabschnitt handeln, welcher mit dem restlichen Gehäuse des Arbeitsgeräts 1 komplettiert wird. Das Gehäuse 12a der Akkuaufnahme besitzt zwei gegenüberliegende L-förmige Führungsstege 43, die gemeinsam den Einschubschacht 26 für den dargestellten Akku 18 bilden. Zwischen den beiden Führungsstegen 43 sind mehrere Kontakte 27 in Form von länglichen in Einschubrichtung orientierten Flachkontakten parallel zueinander angeordnet, vorgesehen. Sie dienen dazu, die entsprechenden Kontakte im Akku zu kontaktieren. Ferner umfasst das Teil 12a zwei weitere Führungsstege 44, die entsprechende Führungsnasen 58 (vgl. Fig. 10) aufnehmen. Am oberen Ende des Teils 12a befindet sich eine Ausnehmung 48, in die ein entsprechender Haltevorsprung 59 des Akkus 18 (vgl. Fig. 12) eingreift.

Die jeweiligen Kontakte 27 sind über Kontaktfüße 27a, 27b, die durch die Platine hindurch geführt sind, an letzterer befestigt bzw. mit letzterer verlötet, wie sich dies aus Fig. 9b ergibt. Die Platine 8 ist von einem umlaufenden Rahmen 45 umgeben, der dazu vorgesehen ist, die Platine 8 sowie die darauf befindlichen elektronischen Bauelemente mit Vergussmasse 17 zu vergießen, wie dies aus Fig. 9c ersichtlich ist. Lediglich die Anschlussmittel 11 sowie mehrere Befestigungsanschlüsse 65 sind nicht von Vergussmasse umgeben.

Der gesamte Bereich der elektronischen Bauelemente einschließlich des Anschlusses der Kontakte 27 an der Platine 8 sind somit vor einem Eintritt von Wasser durch Verkapselung mit Vergussmasse 17 geschützt. Die Kontakte 27 ragen durch das Gehäuse 12a hindurch an der Außenseite zwischen den beiden Führungsstegen 43 empor.

Fig. 10 zeigt ein Beispiel eines erfindungsgemäßen Akkus 18 zur Verwendung mit einem erfindungsgemäßen Arbeitsgerät 1. Der Akku 18 besitzt ein Akkugehäuse 46, welches aus zwei Gehäuseschalen besteht, die wasserdicht miteinander verbunden sind. Der Akku 18 umfasst einen im Vergleich zum restlichen Ackugehäuse 46 etwas erhabenen Anschlussbereich 47 mit zwei seitlich positionierten Führungen 63. Im Inneren des Anschlussbereichs 47 befindet sich eine Mehrzahl von Kontaktierungs-Kammern 49 mit jeweils schlitzartigen Durchtrittsöffnungen 50 zur Aufnahme der Kontakte 27 des Arbeitsgeräts. Die schlitzartigen Durchtrittsöffnungen 50 sind sowohl an der Oberseite als auch an der vorderen Stirnseite des Anschlussbereichs 47 ausgebildet. Im Seitenbereich befinden sich Führungsnasen 58, die in die Ausnehmungen der Führungsstege 44 der Gehäusewand 12a eingreifen. Des Weiteren ist ein endseitiger Haltevorsprung 59 vorgesehen, der in die entsprechende Ausnehmung 48 am Gehäuseteil 12a eingreift. Der Anschlussbereich 47 ist vorzugsweise mehrteilig ausgebildet und wird über geeignete Befestigungsmittel 67 mit dem Gehäuse 46 verbunden.

Die Fig. 11 zeigt das Aufschieben des Anschlussbereichs 47 des Akkus 18 in den Einschubschacht 26 des Gehäuseteils 12a des Arbeitsgeräts. Der Akku 18 wird mit seinem Anschlussbereich 47 vor die Führungsstege 43 gesetzt und anschließend in Richtung der Kontakte 27 des Gehäuseteils 12a verschoben (siehe Pfeil), wodurch die Kontakte 27 durch die schlitzartigen Durchtrittsöffnungen 50 hindurch in die jeweiligen Kontaktierungs-Kammern 49 eingreifen.

Fig. 12 zeigt den Gehäuseteil 12a des Arbeitsgeräts, gepaart mit dem Akku 18. Die restlichen Bestandteile des Arbeitsgeräts sind der Übersichtlichkeit halber nicht dargestellt. Die Darstellung zeigt die einzelnen Akkuzellen 57, die von dem zweiteiligen Akkugehäuse 46 umgeben sind. Das Akkugehäuse 46 ist gegen den Eintritt von Wasser durch eine umlaufende Dichtung 64 gesichert, die sich in einer entsprechenden Ausnehmung im stirnseitigen Kontaktbereich der beiden Gehäuseschalen befindet. Der Akku 18 wird an dem Gehäuseteil 12a über den Haltevorsprung 59 gehalten, der in die Ausnehmung 48 des Gehäuseteils 12a eingreift. Dieser Eingriff kann durch einen handbetätigbaren Lösemechanismus 60 bei Bedarf gelöst und der Akku aus dem Einschubschacht 26 herausgeschoben werden. Aus Fig. 12 ist erkennbar, dass eine Kontaktklammer 55 den Kontakt 27 im zweiten Bereich 42 kontaktiert, wohingegen der erste Bereich 41 nicht kontaktiert ist. Der Stromabgriff erfolgt daher lediglich am zweiten Bereich 42 des Kontakts 27. Der Strom wird somit über den zweiten Bereich 42 gezogen und der Platine 8 bzw. den dort befindlichen elektronischen Bauelementen zugeführt. Der zweite Oberflächenbereich 42 ist am Kontakt 27 an der in Einschubrichtung befindlichen Seite des Kontakts 27 positioniert.

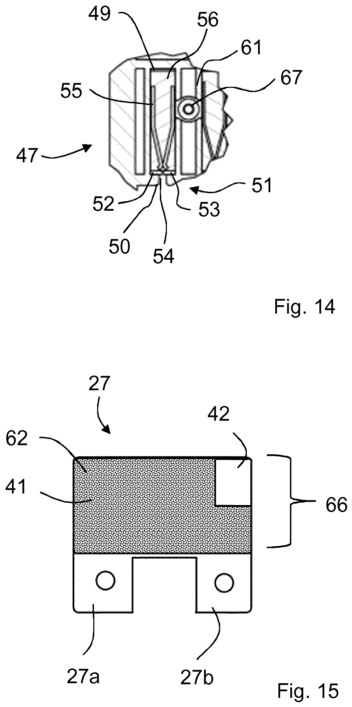

Zum besseren Verständnis ist in Fig. 13 der Anschlussbereich 47 als Teilschnittdarstellung wiedergegeben, sodass das Innere des Anschlussbereichs 47 besser sichtbar ist. Im Innenbereich des Anschlussbereichs 47 sind bei der in Fig. 13 gezeigten Ausgestaltung insgesamt vier Kontaktierungs-Kammern 49 vorgesehen, wobei jede Kontaktierungs-Kammer 49 zur Kontaktierung eines Kontakts 27 vorgesehen ist. In Fig. 13 ist hierzu jeweils lediglich der Kontakt 27 dargestellt, welcher durch die jeweilige schlitzartige Durchtrittsöffnung 50 in die betreffende Kontaktierungs-Kammer 49 sich hinein erstreckt. Die einzelnen Kontaktierungs-Kammern 49 sind durch Kammerwände 61 voneinander getrennt. Jede Kontaktierungs-Kammer 49 umfasst eine Kontaktklammer 55, die beidseitig an dem Kontakt 27 angreift. Die betreffende Anordnung ist noch deutlicher in der Teilansicht gemäß Fig. 14 ersichtlich, wobei in Fig. 14 kein Kontakt 27 dargestellt ist. Wie aus Fig. 14 deutlich wird, ist die schlitzartige Durchtrittsöffnung 50 jeder Kontaktierungs-Kammer 49 gegen einen Eintritt von Wasser geschützt. Dies erfolgt beispielsweise durch eine elastische Verschlusseinrichtung 51 im vorderen Bereich der Kontaktierungs-Kammer 49. Diese elastische Verschlusseinrichtung 51 kann beispielsweise durch ein erstes sowie zweites elastisches Plättchen 52, 53 realisiert sein, die quer zur Einschubrichtung unmittelbar nach der schlitzartigen Durchtrittsöffnung 50 innenseitig in der Kontaktierungs-Kammer 49 angeordnet sind. Die beiden Plättchen 52, 53 können einen geringfügigen Spalt 54 bilden, durch den hindurch der Kontakt 27 verläuft. Statt der Plättchen können auch Abdichtelemente in Form von zwei Wülsten oder dergleichen vorgesehen sein. Sie müssen lediglich aus einem elastischen Material bestehen, wie z. B. aus Gummi, elastischem Kunststoff oder dergleichen.

Wie aus Fig. 14 weiterhin ersichtlich ist, ist die jeweilige Kontaktierungs-Kammer 49 zusätzlich mit einer gelartigen Masse 56 gefüllt, die noch einen zusätzlichen Schutz gegen einen Eintritt von Wasser in die Kontaktierungs-Kammer 49 gewährleistet. Bei der gelartigen Masse 56 handelt es sich vorzugsweise um ein elektrisch isolierendes Material mit einem spezifischen Widerstand von größer 1 × 10¹⁰ Ω × mm²/m, vorzugsweise von größer 1 × 10¹³ Ω × mm²/m, besonders vorzugsweise von größer 1 × 10¹⁵ Ω × mm²/m.

Beispielsweise kann es sich hierbei um ein vernetztes Gel auf Silikon-Basis handeln.

Die Kontaktklammern 55 sind vorzugsweise in das Akkugehäuse 46 oder in eine mit letzterer verbundenen Halterung eingeformt bzw. damit verspritzt. Die Kontaktklammern 55 sind ferner über eine geeignete Kontaktierung mit einer innerhalb des Akkugehäuses 46 befindlichen Leiterplatte des Akkus 18 elektrisch verbunden. Im vorderseitigen Bereich laufen die Schenkel der Kontaktklammern 55 zusammen und bilden den Bereich, der den zweiten Oberflächenbereich 42 des Kontakts 27 kontaktiert.

Sobald der Akku 18 aus dem Einschubschacht 26 herausgezogen wird, schließt das elastische Verschlusselement 51 die Kontaktierungs-Kammer 49 ab und verhindert hierdurch einen Eintritt von Wasser in Letztere. Die elastische Verschlusseinrichtung 51 bewirkt in Verbindung mit der gelartigen Masse 56 zudem, dass beim Entfernen des Akkus 18 aus dem Einschubschacht durch das hierdurch begründete Herausziehen des Kontakts 27 des Arbeitsgeräts 1 aus der Kontaktierungs-Kammer 49 die elastische Verschlusseinrichtung 51 die gelartige Masse 56 vom Kontakt 27 des Arbeitsgeräts 1 abstreift.

Fig. 15 zeigt den Kontakt 27 als solchen. Der im Außenbereich des Gehäuses 12a befindliche Teil des Kontakts 27 ist in Fig. 15 mit der Bezugsziffer 66 gekennzeichnet. Das Material des Kontakts (z. B. Metall) ist vorzugsweise mit einer galvanischen Schutzschicht überzogen, auf der sich wiederum im ersten Oberflächenbereich 41 des außenseitigen Kontaktbereichs 66 die Oberflächenschutzschicht 62 befindet. Der zweite Oberfflächenbereich 42 des Kontakts 27 ist Oberflächenschutzschicht-frei ausgebildet. Wie aus Fig. 15 ersichtlich, ist die Fläche des ersten Oberflächenbereichs 41 deutlich größer als der Oberflächenschutzschicht-freie zweite Oberflächenbereich 42.

Bei der Oberflächenschutzschicht 62 handelt es sich vorzugsweise um eine einen Stromfluss unterbindende bzw. isolierende Lackschicht, insbesondere eine Abdecklackschicht, vorzugsweise auf Acrylbasis. Die Lackschicht verhindert einen elektrischen Stromfluss zum umgebenden Wasser. Alternativ kann statt einer Lackschicht auch eine Schicht aus Vergussmasse als Oberflächenschicht vorgesehen sein, vorzugsweise eine Vergussmasse auf Basis eines Gießharzes bzw. auf PU-, Epoxid- oder Silikonbasis. Bei dem Ausgangsmaterial des Kontakts 27 kann es sich beispielsweise um herkömmliches Kontaktblech handeln, aus dem der Kontakt 27 ausgestanzt werden kann.

Die Erfindung ermöglicht es, ein Arbeitsgerät der beschriebenen Art unter Wasser, sogar unter Salzwasser, zu betreiben.

Es wird ausdrücklich darauf hingewiesen, dass auch die Kombination von Einzelmerkmalten sowie Untermerkmalen als erfindungswesentlich und vom Offenbarungsgehalt der Anmeldung umfasst anzusehen sind.

### BEZUGSZEICHENLISTE

- 1: Arbeitsgerät
- 2: Hydraulikpumpe
- 2a: Kolbenverdichter
- 2b: Kolbenverdichter
- 3: Elektromotor
- 4: Hydraulikzylinder
- 5: Kolbenstange
- 6: Steuerventil
- 7: Verbindungselement
- 8: Platine
- 9: elektronisches Bauelement
- 10a: Steuerungsleitung
- 10b: Steuerungsleitung
- 11: Anschlussmittel
- 12: Gehäuse
- 12a: Gehäuse Akkuaufnahme
- 13: Ein-/Ausschalter
- 14: Display
- 15: erster Handgriff
- 16: zweiter Handgriff
- 17: Vergussmasse
- 18: Akku
- 19: Hydrauliktank
- 20: Platine
- 21: Magnetsensor
- 22: Platine
- 23a: Stromkabel
- 23b: Stromkabel
- 23c: Stromkabel
- 24a: elektrischer Anschluss
- 24b: elektrischer Anschluss
- 24c: elektrischer Anschluss

- 25: Bedienfeld
- 26: Einschubschacht
- 27: Kontakt
- 27a: Kontaktfuß
- 27b: Kontaktfuß
- 28: Rückschlagventil
- 29: Sicherheitsventil
- 29: Sicherheitsventil
- 30: Hydraulikfluid
- 31: Druckabschaltventil
- 32: Druckumschaltventil
- 33: Sensorhalter
- 34: Magnethalter
- 35a: Werkzeughälfte
- 35b: Werkzeughälfte
- 36: Exzenterwelle
- 37: Spalt
- 38: Überstand
- 39: Stufe
- 40: Solltrennstelle
- 41: erster Oberflächenbereich
- 42: zweiter Oberflächenbereich
- 43: Führungssteg
- 44: Führungssteg
- 45: umlaufender Rahmen
- 46: Akkugehäuse
- 47: Anschlussbereich
- 48: Ausnehmung
- 49: Kontaktierungs-Kammer
- 50: schlitzartige Durchtrittsöffnung
- 51: elastische Verschlusseinrichtung
- 52: Plättchen
- 53: Plättchen
- 54: Spalt
- 55: Kontaktklammer
- 56: gelartige Masse
- 57: Akkuzelle
- 58: Führungsnase
- 59: Haltevorsprung
- 60: Lösemechanismus
- 61: Kammerwand
- 62: Oberflächenschutzschicht
- 63: Führung
- 64: umlaufende Dichtung
- 65: Befestigungsanschluss
- 66: außenseitiger Kontaktbereich
- 67: Befestigungsmittel

## Patentansprüche

1. Tragbares Arbeitsgerät (1), wie z.B. Spreizgerät, Schneidgerät oder Kombigerät mit Schneid- sowie Spreizfunktion, für den portablen Einsatz mit
einem Gehäuse (12),
einem im Gehäuse (12) befindlichen Elektromotor,
einem Einschubschacht (26) am Arbeitsgerät (1),
einer Energieversorgung in Form eines Akkus (18),
wobei sich der Akku (18) oder der Anschluss für die Verbindung mit der externen elektrischen Energiequelle im Einschubschacht (26) befindet,
einer mechanisch oder hydraulisch angetriebenen, verfahrbarer Kolbenstange (5) zum Verrichten von Arbeit, insbesondere Spreizarbeit und/oder Schneidarbeit und/oder Hebe- und/oder Drückarbeit,
einer elektronischen Steuer- und Regeleinrichtung zur Steuerung und/oder Regelung des Elektromotors (3), die eine mit Vergussmasse (17) vergossene Platine (8) umfasst, auf der elektronische Bauelemente (9) angeordnet sind,
wobei am Einschubschacht (26) mindestens ein Kontakt (27), vorzugsweise in Einschubrichtung orientierten Flachkontakt, aus elektrisch leitendem Material vorgesehen ist, welcher durch ein Einschieben des Akkus (18) in den Einschubschacht (26) eine lösbare elektrische Kontaktierung zwischen dem Akku (18) und der elektronischen Steuer- und Regeleinrichtung des Arbeitsgeräts (1) ermöglicht, **dadurch gekennzeichnet, dass**
der Kontakt (27) in einen ersten Oberflächenbereich (41) sowie zweiten Oberflächenbereich (42) aufgeteilt ist,
der erste Oberflächenbereich (41) mit einer nicht leitfähigen Oberflächenschutzschicht (62) überzogen ist, und
der zweite Oberflächenbereich (42) Oberflächenschutzschicht-frei ist.

2. Arbeitsgerät (1) nach Anspruch 1, **dadurch gekennzeichnet, dass** der erste Oberflächenbereich (41) größer ist als der zweite Oberflächenbereich (42).

3. Arbeitsgerät (1) nach Anspruch 1 oder 2, **dadurch gekennzeichnet, dass** der zweite Oberflächenbereich (42) auch die Stirnflächen des Kontakts (27) umfasst.

4. Arbeitsgerät (1) nach mindestens einem der vorhergehenden Ansprüche, **dadurch gekennzeichnet, dass** der Kontakt (27) mindestens einen Kontaktfuß (27a, 27b) aufweist, welcher mittels Vergussmasse (17) verkapselt mit der Platine (8) verbunden ist.

5. Arbeitsgerät (1) nach mindestens einem der vorhergehenden Ansprüche, **dadurch gekennzeichnet, dass** mehrere Kontakte (27) in Einschubrichtung orientiert parallel zueinander angeordnet sind.

6. Arbeitsgerät (1) nach mindestens einem der vorhergehenden Ansprüche, **dadurch gekennzeichnet, dass** es sich bei der Oberflächenschutzschicht (43) um eine Lackschicht, insbesondere eine Lackschicht auf Acryl-Basis von handelt.

7. Arbeitsgerät (1) nach mindestens einem der vorhergehenden Ansprüche 1 bis 5, **dadurch gekennzeichnet, dass** es sich bei der Oberflächenschutzschicht (43) um eine Schicht aus Vergussmasse, insbesondere eine Vergussmasse auf Gießharz-Basis handelt.

8. Arbeitsgerät (1) nach mindestens einem der vorhergehenden Ansprüche 1 bis 7, **dadurch gekennzeichnet, dass** der Kontakt (27) vollständig mit einer galvanischen Schutzschicht überzogen ist.

9. Arbeitsgerät (1) nach mindestens einem der vorhergehenden Ansprüche, **dadurch gekennzeichnet, dass** als Elektromotor (3) ein bürstenloser Gleichstrommotor (3) vorgesehen ist,
die elektronischen Bauelementen (9) der Platine (8) zum Schutz gegen Eintritt von Wasser mit Vergussmasse (17) umschlossen sind
mit mindestens einem Steuerungskabel (10a, 10b) zum Transport von Signalen zur Steuerung, wobei die Steuerungskabel (10a, 10b) Anschlussmittel (11) zum Anschluss an die Platine (8, 20, 22) aufweisen, und
die Anschlussmittel (11) des Steuerungskabels (10a, 10b) vorzugsweise mittels einer Dichtung gegen ein Eindringen von Wasser geschützt sind.

10. Arbeitsgerät (1) nach mindestens einem der vorhergehenden Ansprüche, **dadurch gekennzeichnet, dass** am Gehäuse (12) keine Schutz- und/oder Dichtungsmaßnahmen gegen einen Eintritt von Wasser in das Innere des Gehäuses (12) bei einem Eintauchen des Gehäuses (12) in Wasser vorgesehen sind.

11. Akku (18) zur Verwendung bei einem tragbaren Arbeitsgerät, wie z.B. Spreizgerät, Schneidgerät oder Kombigerät mit Schneid- sowie Spreizfunktion, insbesondere zur Verwendung bei einem Arbeitsgerät (1) nach einem der vorhergehenden Ansprüche, umfassend
ein wasserdichtes Akkugehäuse (46),
innerhalb des Akkugehäuses (46) angeordnete Akkuzellen (57),
einen nicht gegen Wasser geschützten Anschlussbereich (47) für einen elektrischen Anschluss des Akkus (18) am Anschluss- oder Einschubschacht (26) des Arbeitsgeräts (1),
und **dadurch gekennzeichnet, dass**
der Anschlussbereich (47) mindestens eine im Akkugehäuse (46) untergebrachte, von außen über eine schlitzartige Durchtrittsöffnung (50) zugängliche gegen einen Eintritt von Wasser geschützte Kontaktierungs-Kammer (49) aufweist, in der sich mindestens ein Kontaktelement (55) vorzugsweise in Form einer Kontaktklammer befindet.

12. Akku (18) nach Anspruch 11, **dadurch gekennzeichnet, dass**
der Anschlussbereich (47) eine Erhöhung am Außengehäuse (46) bildet.

13. Akku (18) nach Anspruch 11 oder 12, **dadurch gekennzeichnet, dass**
in der Kontaktierungs-Kammer (49) im Bereich der schlitzartigen Durchtrittsöffnung (50) eine elastische Verschlusseinrichtung (51) vorgesehen ist, die sich beim Einschieben eines Kontakts durch die Durchtrittsöffnung (50) verformt.

14. Akku (18) nach Anspruch 13, **dadurch gekennzeichnet, dass**
die elastische Verschlusseinrichtung (51) mindestens zwei quer zur schlitzartigen Durchtrittsöffnung orientierte biegsame Dichtelemente, insbesondere in Form von Plättchen (52, 53) oder Wülsten aufweist.

15. Akku (18) nach Anspruch 14, **dadurch gekennzeichnet, dass**
die zwei quer zur schlitzartigen Durchtrittsöffnung orientierten Plättchen (52, 53) sich stirnseitig berühren, einen Spalt (54) zwischen sich bilden oder sich überlappen.

16. Akku (18) nach einem der Ansprüche 11 bis 15, **dadurch gekennzeichnet, dass** die Kontaktierungs-Kammer (49) mit einer gelartigen Masse (56) gefüllt ist.

17. Akku (18) nach Anspruch 16, **dadurch gekennzeichnet, dass** die gelartige Masse (56) einen spezifischen Widerstand von größer 1 × 10¹⁰ Ω × mm²/m, vorzugsweise von größer 1 × 10¹³ Ω × mm²/m, besonders vorzugsweise von größer 1 × 10¹⁵ Ω × mm²/m aufweist.

18. Akku (18) nach Anspruch 16 oder 17, **dadurch gekennzeichnet, dass** es sich bei der gelartigen Masse (56) um ein vernetztes Gel auf Silikonbasis handelt.

19. Anordnung umfassend ein tragbares Arbeitsgerät (1) gemäß mindestens einem der Ansprüche 1 bis 10 sowie einen Akku (18) gemäß mindestens einem der Ansprüche 11 bis 18.

## Claims

1. Portable work apparatus (1), such as an expander, cutter or combination device with a cutting and expanding function for example, for portable use, having
a housing (12),
an electric motor (3) located in the housing (12),
an insert shaft (26) on the work apparatus (1),
a power supply in the form of a rechargeable battery (18) ,
the rechargeable battery (18) or the connection for connection to the external electrical power source being located in the insert shaft (26),
a mechanically or hydraulically driven, displaceable piston rod (5) for performing work, in particular expanding work and/or cutting work and/or lifting and/or compressing work,
an electronic open-loop control and closed-loop control device for open-loop control and/or closed-loop control of the electric motor (3), which device comprises a printed circuit board (8) which is potted with potting compound (17) and on which electronic components (9) are arranged,
at least one contact (27), preferably flat contact oriented in the insertion direction, composed of electrically conductive material being provided on the insert shaft (26), which contact allows releaseable electrical contact-connection between the rechargeable battery (18) and the electronic open-loop and closed-loop control device of the work apparatus (1) by insertion of the rechargeable battery (18) into the insert shaft (26), **characterized in that**
the contact (27) is divided into a first surface region (41) and a second surface region (42),
the first surface region (41) is covered with a nonconductive surface protection layer (62), and
the second surface region (42) has no surface protection layer.

2. Work apparatus (1) according to Claim 1, **characterized in that** the first surface region (41) is larger than the second surface region (42).

3. Work apparatus (1) according to Claim 1 or 2, **characterized in that** the second surface region (42) also comprises the end faces of the contact (27).

4. Work apparatus (1) according to at least one of the preceding claims, **characterized in that** the contact (27) has at least one contact foot (27a, 27b) which is connected to the printed circuit board (8) in a manner encapsulated by means of potting compound (17).

5. Work apparatus (1) according to at least one of the preceding claims, **characterized in that** a plurality of contacts (27) are arranged in a manner oriented parallel to one another in the insertion direction.

6. Work apparatus (1) according to at least one of the preceding claims, **characterized in that** the surface protection layer (43) is a lacquer layer, in particular an acrylic-based lacquer layer.

7. Work apparatus (1) according to at least one of the preceding Claims 1 to 5, **characterized in that** the surface protection layer (43) is a layer composed of potting compound, in particular a cast resin-based potting compound.

8. Work apparatus (1) according to at least one of the preceding Claims 1 to 7, **characterized in that** the contact (27) fully coated with a galvanic protective layer.

9. Work apparatus (1) according to at least one of the preceding claims, **characterized in that** the electric motor (3) provided is a brushless DC motor (3),
the electronic components (9) of the printed circuit board (8) are surrounded by potting compound (17) for protection against the ingress of water,
having at least one control cable (10a, 10b) for transporting signals for control purposes, the control cables (10a, 10b) having connection means (11) for connection to the printed circuit board (8, 20, 22), and
the connection means (11) of the control cable (10a, 10b) are preferably protected against the ingress of water by means of a seal.

10. Work apparatus (1) according to at least one of the preceding claims, **characterized in that** no protection and/or sealing measures against the ingress of water into the interior of the housing (12) when the housing (12) is immersed in water are provided on the housing (12).

11. Rechargeable battery (18) for use in a portable work apparatus, such as an expander, cutter or combination device with a cutting and expanding function for example, in particular for use in a work apparatus (1) according to one of the preceding claims, comprising
a water-tight rechargeable battery housing (46),
rechargeable battery cells (57) arranged within the rechargeable battery housing (46),
a connection region (47), not protected against water, for electrical connection of the rechargeable battery (18) to the connection or insert shaft (26) of the work apparatus (1),
and **characterized in that**
the connection region (47) has at least one contact-making chamber (49) accommodated in the rechargeable battery housing (46), accessible from outside via a slot-like passage opening (50) and protected against the ingress of water, at least one contact element (55), preferably in the form of a contact clip, being located in the contact-making chamber.

12. Rechargeable battery (18) according to Claim 11, **characterized in that**
the connection region (47) forms a raised portion on the external housing (46).

13. Rechargeable battery (18) according to Claim 11 or 12, **characterized in that**
an elastic closure device (51) is provided in the contact-making chamber (49) in the region of the slot-like passage opening (50), the elastic closure device being deformed by the passage opening (50) when a contact is inserted.

14. Rechargeable battery (18) according to Claim 13, **characterized in that**
the elastic closure device (51) has at least two flexible sealing elements, in particular in the form of small plates (52, 53) or beads, oriented transversely to the slot-like passage opening.

15. Rechargeable battery (18) according to Claim 14, **characterized in that**
the two small plates (52, 53) oriented transversely to the slot-like passage opening make contact at the end sides, form a gap (54) between them or overlap.

16. Rechargeable battery (18) according to one of Claims 11 to 15, **characterized in that** the contact-making chamber (49) is filled with a gel-like compound (56).

17. Rechargeable battery (18) according to Claim 16, **characterized in that** the gel-like compound (56) has a specific resistance of greater than 1 × 10¹⁰Ω × mm²/m, preferably of greater than 1 × 10¹³Ω × mm²/m, particularly preferably of greater than 1 × 10¹⁵Ω × mm²/m.

18. Rechargeable battery (18) according to Claim 16 or 17, **characterized in that** the gel-like compound (56) is a silicone-based crosslinked gel.

19. Arrangement comprising a portable work apparatus (1) according to at least one of Claims 1 to 10 and a rechargeable battery (18) according to at least one of Claims 11 to 18.

## Revendications

1. Outil de travail portatif (1), comme par exemple un outil d'écartement, un outil de coupe ou un outil combiné doté d'une fonction de coupe et d'écartement, destiné à un usage portable, comprenant
un boîtier (12),
un moteur électrique (3) se trouvant dans le boîtier (12),
un compartiment d'insertion (26) sur l'outil de travail (1),
une alimentation en énergie sous la forme d'un accumulateur (18),
dans lequel l'accumulateur (18) ou le raccordement pour la connexion à la source d'énergie électrique externe se trouve dans le compartiment d'insertion (26)
une tige de piston déplaçable (5) à entraînement mécanique ou hydraulique, servant à effectuer un travail, en particulier un travail d'écartement et/ou un travail de coupe et/ou un travail de levage et/ou de poussée,
un dispositif de commande et de régulation électronique servant à commander et/ou à réguler le moteur électrique (3) et comprenant une platine (8) scellée par une masse de scellement (17) sur laquelle sont disposés des composants électroniques (9),
dans lequel, au niveau du compartiment d'insertion (26), au moins un contact (27), de préférence un contact plat orienté dans la direction d'insertion, en matériau électriquement conducteur est prévu qui permet par une insertion de l'accumulateur (18) dans le compartiment d'insertion (26) une mise en contact électrique amovible entre l'accumulateur (18) et le dispositif de commande et de régulation électronique de l'outil de travail (1),
**caractérisé en ce que**
le contact (27) est divisé en une première zone de surface (41) ainsi qu'en une deuxième zone de surface (42),
la première zone de surface (41) est recouverte d'une couche de protection de surface non conductrice (62), et
la deuxième zone de surface (42) est exempte de toute couche de protection de surface.

2. Outil de travail (1) selon la revendication 1, **caractérisé en ce que** la première zone de surface (41) est supérieure à la deuxième zone de surface (42).

3. Outil de travail (1) selon la revendication 1 ou 2, **caractérisé en ce que** la deuxième zone de surface (42) comprend aussi les surfaces frontales du contact (27) .

4. Outil de travail (1) selon au moins l'une des revendications précédentes, **caractérisé en ce que** le contact (27) présente au moins une broche de contact (27a, 27b) qui est reliée de manière encapsulée à la platine (8) au moyen d'une masse de scellement (17).

5. Outil de travail (1) selon au moins l'une des revendications précédentes, **caractérisé en ce que** plusieurs contacts (27) sont disposés en parallèle les uns aux autres en étant orientés dans la direction d'insertion.

6. Outil de travail (1) selon au moins l'une des revendications précédentes, **caractérisé en ce que** la couche de protection de surface (43) est une couche de vernis, en particulier une couche de vernis à base acrylique.

7. Outil de travail (1) selon au moins l'une des revendications précédentes 1 à 5, **caractérisé en ce que** la couche de protection de surface (43) est une couche en masse de scellement, en particulier en masse de scellement à base de résine de coulée.

8. Outil de travail (1) selon au moins l'une des revendications précédentes 1 à 7, **caractérisé en ce que** le contact (27) entièrement recouvert d'une couche de protection galvanique.

9. Outil de travail (1) selon au moins l'une des revendications précédentes, **caractérisé en ce qu'**un moteur à courant continu sans balais (3) est prévu comme moteur électrique (3),
les composants électroniques (9) de la platine (8) sont entourés d'une masse de scellement (17) pour la protection contre la pénétration d'eau,
comprenant au moins un câble de commande (10a, 10b) pour transporter des signaux jusqu'à la commande, les câbles de commande (10a, 10b) présentant des moyens de raccordement (11) pour la connexion à la platine (8, 20, 22), et
les moyens de raccordement (11) du câble de commande (10a, 10b) sont de préférence protégés contre la pénétration d'eau au moyen d'un joint d'étanchéité.

10. Outil de travail (1) selon au moins l'une des revendications précédentes, **caractérisé en ce que** sur le boîtier (12), aucune mesure de protection et/ou d'étanchéité n'est prévue contre la pénétration d'eau à l'intérieur du boîtier (12) lorsque le boîtier (12) est plongé dans l'eau.

11. Accumulateur (18) destiné à être utilisé sur un outil de travail portatif, comme par exemple un outil d'écartement, un outil de coupe ou un outil combiné doté d'une fonction de coupe et d'écartement, en particulier destiné à être utilisé sur un outil de travail (1) selon l'une quelconque des revendications précédentes, comprenant
un boîtier d'accumulateur (46) étanche à l'eau,
des cellules d'accumulateur (57) disposées à l'intérieur du boîtier d'accumulateur (46),
une zone de raccordement (47) non protégée contre l'eau, servant à un raccordement électrique de l'accumulateur (18) au niveau du compartiment de raccordement ou d'insertion (26) de l'outil de travail (1), et
**caractérisé en ce que** la zone de raccordement (47) présente au moins une chambre de mise en contact (49) logée dans le boîtier d'accumulateur (46), accessible de l'extérieur à travers une ouverture de passage (50) en forme de fente et protégée contre l'eau, dans laquelle se trouve au moins un élément de contact (55) de préférence sous la forme d'une bride de contact.

12. Accumulateur (18) selon la revendication 11, **caractérisé en ce que** la zone de raccordement (47) forme un relief au niveau du boîtier extérieur (46).

13. Accumulateur (18) selon la revendication 11 ou 12, **caractérisé en ce que** dans la chambre de mise en contact (49), au niveau de l'ouverture de passage (50) en forme de fente, un dispositif de fermeture élastique (51) est prévu qui se déforme lorsqu'un contact est inséré à travers l'ouverture de passage (50).

14. Accumulateur (18) selon la revendication 13, **caractérisé en ce que** le dispositif de fermeture élastique (51) présente au moins deux éléments d'étanchéité flexibles, orientés transversalement à l'ouverture de passage en forme de fente, en particulier sous la forme de languettes (52, 53) ou de bourrelets.

15. Accumulateur (18) selon la revendication 14, **caractérisé en ce que** les deux languettes (52, 53) orientées transversalement à l'ouverture de passage en forme de fente se touchent sur la face frontale, forment une fente (54) entre elles ou se chevauchent.

16. Accumulateur (18) selon l'une quelconque des revendications 11 à 15, **caractérisé en ce que** la chambre de mise en contact (49) est remplie d'une masse (56) en forme de gel.

17. Accumulateur (18) selon la revendication 16, **caractérisé en ce que** la masse (56) en forme de gel présente une résistivité supérieure à 1 × 10¹⁰ Ω × mm²/m, de préférence supérieure à 1 × 10¹³ Ω × mm²/m, de manière particulièrement préférée supérieure à supérieure à 1 × 10¹⁵ Ω × mm²/m.

18. Accumulateur (18) selon la revendication 16 ou 17, **caractérisé en ce que** la masse en forme de gel (56) est un gel réticulé à base de silicone.

19. Agencement comprenant un outil de travail portatif (1) selon au moins l'une des revendications 1 à 10 ainsi qu'un accumulateur (18) selon au moins l'une des revendications 11 à 18.
